# EUROPEAN PATENT SPECIFICATION

(11) **EP 1 135 858 B1**
(45) Date of publication and mention of the grant of the patent: **18.06.2008**
(21) Application number: 99958994.8
(22) Date of filing: 12.11.1999
(51) Int. Cl.: H03K 17/94, H03M 11/00, H01H 9/26, H01H 9/00, B32B 3/00, B32B 5/16, B32B 7/14, H01H 13/70

(54) **BACKLIGHTING FOR COMPUTER KEYBOARD**
HINTEGRUNDBELEUCHTUNG FÜR RECHNERTASTATUR
ÉCLAIRAGE EN ARRIÈRE-PLAN DE CLAVIERS D'ORDINATEUR

(30) Priority: 13.11.1998 US 108310 P
(43) Date of publication of application: 26.09.2001
(73) Proprietor: FireFly International, Inc., Dunedin FL 34698 (US)
(72) Inventor: CHAN,SAM,E.J, STREET.SAMPOKONG ,KOWLOON.HONG KONG (CN); CHU, King Sum, Unit 3, 2/F., Canny Ind. Build., Kowloon, Hong Kong (CN); CHURCH, W., Edward, Tampa, FL 33624 (US); KRAFFT, Randall, Tampa, FL 33624 (US)
(74) Representative: Gee, Steven William
(86) International application number: PCT/US1999/027065
(87) International publication number: WO 2000/030257

(56) References cited:
- EP-A- 1 108 183
- DE-A- 3 535 217
- US-A- 4 320 268
- US-A- 4 667 273
- US-A- 4 772 769
- US-A- 4 811 175
- US-A- 4 812 831
- US-A- 4 814 566
- US-A- 5 138 119
- US-A- 5 149 923
- US-A- 5 397 867
- US-A- 5 510 782
- US-A- 5 565 733
- US-A- 5 664 860
- US-A- 5 708 428
- US-A- 5 736 233
- US-A- 5 797 482
- US-A- 5 801 345
- US-A- 5 811 930
- US-A- 5 938 772
- US-A- 5 971 557
- PATENT ABSTRACTS OF JAPAN vol. 1998, no. 14, 31 December 1998 (1998-12-31) & JP 10 238096 A (IG TECH RES INC), 8 September 1998 (1998-09-08)

## Description

### BACKGROUND OF THE INVENTION

### Field of the Invention.

This invention pertains, in general, to lighting devices for keyswitch assemblies and keyboards, such as computer desktop, laptop, and notebook keyboards or "Internet-TV" keyboards. More specifically, the invention relates to backlighting for keyboards that originates from below the keys.

### Related Art

For a long time, keyswitch assembly operators have desired lighted keyboards and keypads. For example, when an operator is working a computer keyboard and simultaneously viewing a computer monitor, low ambient light conditions may be preferred, in order to maximize contrast on the monitor screen. Also, for example, a portable computer operator may by necessity be in a low light environment, as when flying in an airplane or riding in a train at night.

In any event, there have been many attempts in the prior art to provide lighted keyboards and keypads. Still, many of these attempts have not been successful because they result in keyswitch assemblies that are not sufficiently lighted, or lighted in a glaring or distracting manner, or that are inconvenient, or expensive. Prior attempts at lighted keyboards have produced fragile systems that consume more power and produce more heat than is desirable.

Examples of lighted keyswitch assemblies are found in the patent literature. U.S. Patent 5,801,345 (Mikula-Curtis *et al.,* 1998) discloses LED's attached to the bottom of the printed circuit board (PCB) which emit light that travels up through holes in the PCB and into light pipes, each of which is received in a key cap to channel the light up through the interior of the key cap. Also, the *Mikula-Curtis et al.* system includes a backlighting system with an LED centered under a light dam and an indicia panel, that emits light up through the center of the area enclosed by the light dam to back-light the indicia panel.

U.S. Patent #5,612,692 (Dugas *et al.,* 1997) discloses a sealed, LED-lighted keyboard, in which the LEDs are disposed on the printed circuit board. The LEDs and circuit board are covered by a spacer board with openings for allowing electrical contact with the top surface of the circuit board and for allowing LED light to reach the upper layers of the system. These "upper layers" include a translucent sealing sheet membrane with domes, and keys above the domes. Thus, in *Dugas,* the keys are pushed down to force the domes down so that a conductive under-surface of the key may contact the circuit board. The LED light must travel up through the spacer board holes, through the center of each dome, up through the center of each key, and out the translucent number, letter, or other indicia on the top center of the key cap.

U.S. Patent 5,034,602 (Garcia*, et al.,* 1991) discloses a backlighting system in which a light emitter, such as an alpha/numeric LED or LCD, is disposed beneath the center of the key cap or adjacent to a beam splitter that redirects the light up through the central axis of the key cap.

U.S. Patent 4,806,908 (Krupnik*,* 1989) discloses a system using electroluminescent (EL) strips that extend through registering openings that extend transversely through the stems of the key switches in the keyboard. The EL strips extend from key stem to key stem underneath an opaque, stationary retaining panel being between the keys, so that only the key cap is lit only by light that is emitted from the area of the EL strips inside the key stems (the "internal portion") and that travels up to the cap of the key. This light from the internal portion of the EL strip travels up through the center of the clear, transparent, or translucent body of the key stem and then to openings or translucent areas in the center of the otherwise opaque key cap. Because the EL strips run underneath the opaque retaining panel and through openings in the stems of a plurality of keys, the EL strips are also adapted to prevent withdrawal of the keys from the retaining panel.

Published application DE 3535217 A1, of ALPS Electric Co., discloses a controller display board or backlit keyboard according to the preamble of claim 1 with an electroluminescent element for overall illumination of the display board. This display board also includes light emitting diodes for partial illumination of thin-film switches.

Summarily, therefore, conventional backlighting techniques feature means for channeling/directing light directly up through the center of the key cap or of the area directly under the indicia panel to be lit. This approach purposely controls the light to travel along a speci fie central axis and then to radiate from the keyboard in a limited area of a single key cap or of a single indicia panel. This approach purposely controls and limits the light path, to prevent light from traveling from keyswitch to keyswitch or from shining from the inside of the keyswitch to the outside of the keyswitch.

What is still needed is a durable, economical and effective backlighting system for a desktop, laptop, notebook, or "Internet-TV" keyboard. What is needed is such a system that supplies appropriate levels of light in the appropriate areas of the keyboard for enhanced viewing in low/no light environments.

### SUMMARY OF THE INVENTION

The present invention comprises lighting a keyboard according to claim 1 for use in low or no ambient light environments, by peripherally lighting the key switch assemblies on a keyboard or keypad, such as a desktop, laptop, notebook, or Intemet-TV keyboard. By "peripherally lighted," it is meant that the keyswitch assemblies are lit externally, from outside rather than from inside, preferably from positions substantially circumscribing the sides and/or extending across the bottom of the keyswitch assemblies. Light emanates from all or portions of a panel that extends between and/or underneath a plurality of keys witches of a keyboard. The panel may be a sheet that extends between keyswitches and preferably reaches underneath the keycaps, by extending near to the stem or stem path of a keyswitch, and/or by extending underneath the keyswitches. Preferably, light emanates up from the radiant panel through the spaces between the keyswitches, and into and through the keyswitches, to give the selected portions of the keyboard an overall "glowing" appearance, rather than giving the keyboard the appearance of having "spots" of light or lighted letters and numerals. This lighting aids key identification and overall visibility in many low/no light environments, and makes laptop lighting possible while traveling because of low power consumption.

Preferably, the radiant panel is electroluminescent (EL) material positioned above the contact membrane or printed circuit board and generally below the keyswitch caps. In embodiments in which the EL material comprises a sheet with perforations, the perforation edges are disposed on at least two sides of, and preferably entirely or substantially around, the key stem or the space through which the stem travels during depression of the key ("stem path"). In embodiments in which the EL material comprises a continuous sheet of material, the sheet extends generally horizontally underneath a plurality of keyswitches between the contact membrane and the lower-most extremity of the keyswitch. When a key is depressed, the continuous sheet is impacted by the contact member of the keyswitch, and transfers force to the contact membrane to execute the "switch." Thus, at a minimum, the EL material preferably extends underneath the peripheral edges of the key cap, or at a maximum, the EL material extends all the way under the key, either scenario allowing a significant amount of light to pass into and up through the keyswitches, and preferably also between the spaces between the keyswitches. The panel and EL material preferably do not extend into the interior of the key cap or key stem, and do not interfere with operation or removal of the key.

In this and the following Description and Claims, the terms "keyswitch assembly" or "keyswitch" or "key" refer to the device conventionally provided in keyboards that is depressed to make contact with and affect (close) its particular switch on the circuit board or membrane (PCB or contact membrane). A keyswitch is typically made of what is called herein a "cap" for finger contact and a "key stem" or "stem" which is the generally vertical structure protruding from the cap toward the circuit board or membrane and which contacts the board or membrane when the key is depressed. Thus, "key stem" herein refers to the downwardly-protruding post attached to the cap, plus inserts, sleeves, domes, and biasing members that extend around or are otherwise connected to the post. The cap and stem of a keyswitch may be separate components, or may be a single component plus a biasing member, for example. In the Description and Claims, the term "substantially continuous panel" means that a panel extends without significant apertures or interruptions except for apertures that are used to receive a portion of the keyswitch such as the stem or to reach near to the stem but leave a space for the stem path, that is, for the stem to move in and out of the aperture. The term "continuous panel" means that the panel extends without significant apertures or interruptions, for example, panels that have no apertures for receiving the keyswitch stems. The inventors envision that a single continuous panel would be beneficial in a laptop computer keyboard that would have no keyswitch stem apertures but would have a hole through the membrane for receiving a "mouse ball" mechanism, for example. The term "extending between" means that a panel extends from keyswitch to keyswitch on any number of planes that are near the keyswitches and generally parallel to the plane of the keyswitches, and is not intended to limit the panel location to one particular plane passing through the midpoint of the keyswitches.

One or more panels comprising EL material may be laid down between, keyswitches and around the stems or stem paths or underneath the keyswitches; in one or more areas of the keyboard. The panels may be of various regular or irregular shapes to backlight particular areas of the keyboard, and the panels may radiate light over all or substantially all of their top surfaces, or may have areas masked or deactivated from radiating light so that not all of the panel radiates light. Panels are herein described in two general categories, sheets and strips, wherein a sheet typically extends between more than two rows of keys and/or more than two columns of keys, and a strip typically extends between only two rows of keys or between only two columns of keys. Several different panels may be provided, for easier design and installation, or for being separately-powered for independent on/off or dimming control. Also, EL panels may be used that provide different colors of backlighting, for differentiating different areas of the key board. Also, not all areas of the keyboard need to be lit.

Preferably, the keycaps used with the present invention are molded using translucent plastic and have opaque markings or portions on their tops, and the key stems and other parts of the keyswitches are either translucent, transparent, or reflective, so that the keyswitch as a whole tends to transfer or reflect light. The EL material may be positioned above a base plate, or installed without a base plate. This way, because the EL material preferably extends across substantially the entire distance between keys, and optionally across the entire distance outside and beneath the keys, the EL light travels upward through and around the translucent keycaps and up through the base plate, thereby backlighting selected portions or substantially the entire top of the keyboard, to "fill" the keyboard surface with light. Thus, the invented system does not feature only the interior lighting, that is, the limited, controlled "light pipe" or axially-channeled light approach discussed in the Related Art section. Instead, the invented system produces a subtle, overall lighted effect that yet is not overwhelming or distracting. Having light "glow" from between the keycaps as well as from the keycaps is surprisingly effective, and produces a "plane of light" effect, giving the user enough subtle light to see and use the keyboard without having "spots" of light or indicia only lit up on top of the key caps.

The radiant EL panels are preferably powered by the computer keyboard port, via voltage inverters which are commercially available for such use. Preferably, one or more dimming, on/off, and auto-off control systems are included in the invented system. These controls may be used to adjust the intensity of the backlighting in some or all portions of the backlit keyboard. Also, these controls may be used to automatically shut off lighting during extended non-use, for battery conservation, and restart it when one or more keystrokes are made. In addition, the preferred controls may be used to independently dim or turn off the lighting of all or selected portions, for example, to produce increased differentiation between the lit portions and the dimmed or non-lit portions.

The invented backlighting system allows easier key identification for fewer input errors, for example, for late night use without disrupting sleeping family members and use on airplanes. The invented system allows a user to accurately and comfortably use the keyboard after purposely darkening a room to reduce glare and shadows. The overall-lighted keyboard may reduce eye fatigue that otherwise may occur when constantly moving the eyes from a lighted monitor to an un-lit keyboard. The intensity adjustment option gives users the ability to adjust the keyboard lighting for their own personal comfort and room conditions.

Another objective of the invented system is to provide a durable lighting system that results in a durable and low-maintenance keyboard. The invented system may use conventional, solid keyswitches without hollow centers, and does not require hollow key stems or special modifications to keyswitches, except for the preferred change to translucent materials. The invented system does not significantly increase the temperature of the keyswitches. The invented system does not require electronic or other complex connections of lighting members to the keyswitches. The preferred system therefore provides an economical lighting mechanism that does not reduce the reliability and life of the keyboard.

The invented backlighting system utilizes commercially-available lighting members, in such a way as to provide a system of efficient, glare-free and low-cost keyboard illumination. The invented system of lighting can be made into any shape or size, for design into new keyboard assemblies, or retrofitting onto existing keyboards, as will be more fully described in the detailed specification which follows.

### BRIEF DESCRIPTION OF THE DRAWINGS

Figure 1A is a top view of one embodiment of a strip-shaped electroluminescent (EL) panel, according to the invention.
Figure 1B is a top view of an embodiment of a die-cut sheet-style EL panel with rectangular apertures for receiving key stems.
Figure 1C is a top view of another embodiment of a die-cut sheet-style EL panel with small circular apertures for receiving key stems.
Figure ID is a top view of an embodiment of a continuous sheet-style EL panel.
Figure 2 is a top view of a keyboard layout with horizontal rows of strip-shaped EL panels beneath and between the keyswitch assemblies.
Figure 3 is a schematic cutaway side view of a design wherein EL panels radiate light up between the keyswitch keycaps through a translucent base plate and up through the keycaps.
Figure 4 is a schematic cutaway side view of the design Figure 3 with an opaque top housing plate, showing EL panels radiating light up through the keycaps only.
Figure 5 is a schematic cutaway side view of another design in which the EL panel extends continuously underneath a plurality of keyswitches.
Figure 6A is a schematic diagram of a typical EL panel wiring diagram.
Figure 6B is schematic diagram of an inverter system for one embodiment of the invention.
Figure 7 is an end, cross-sectional view of one embodiment of a desk-top keyboard, according to the invention, showing a perforated panel of EL material around the key stem assemblies and the collar which supports the key stern.
Figure 8 is an exploded view of the pieces parts of the key board of Figure 7.
Figure 9 is an end, cross-sectional view of one design of a lap-top keyboard, showing a perforated panel of EL material around the key stem paths.
Figure 10 is an exploded view of the pieces parts of the key board of Figure 9.
Figure 11A is an enlarged view of the key cap of Figures 9 and 10.
Figure 11B is an enlarged view of the hinge of Figures 9 and 10.
Figure 11C is an enlarged view of the rubber actuator of Figures 9 and 10.

### DESCRIPTION OF THE PREFERRED EMBODIMENTS

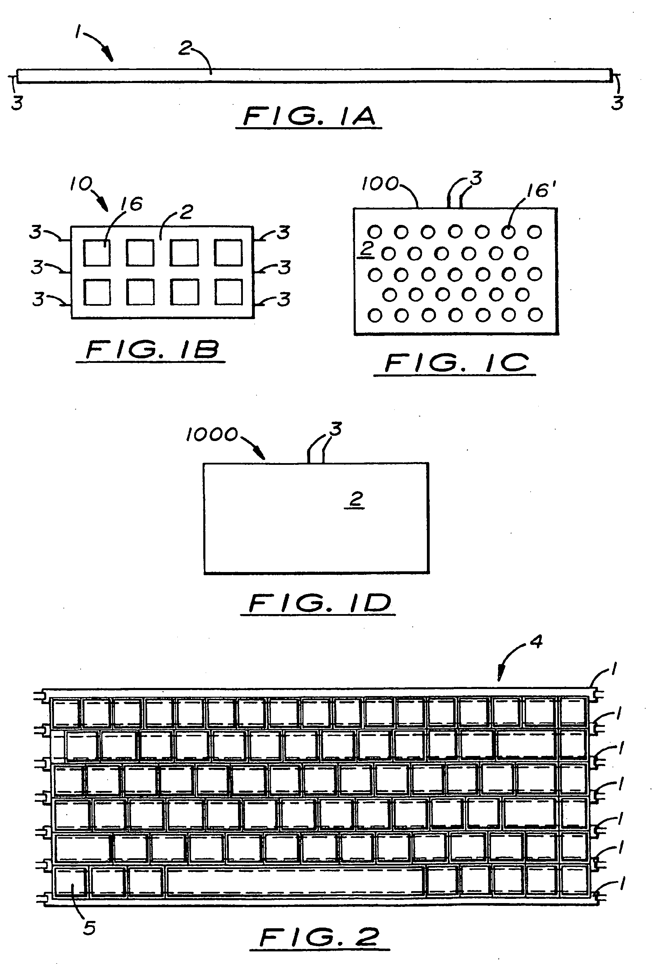

Referring to the Figures, there are shown several, but not the only, embodiments of the invented backlighting system for keyboard. Certain of the drawings show designs which do not fall within the scope of the claims because of amendments made to the claims; nevertheless, these drawings are retained as they clarify features of the invention. Figures 1A-C illustrate electroluminescent (EL) panels some of which may be used in the present invention. Figure 1A is a top view of a strip-shaped electroluminescent panel 1. Figure 1B is a top view of a rectangular die-cut electroluminescent panel 10 with apertures 16 for receiving a plurality of keycaps and stems. Figure 1C is a top view of a die-cut EL panel 100 that has small circular apertures 16' for receiving a plurality of generally cylindrical stems. Figure 1D is a top view of an EL panel 1000 that does not require apertures because it extends continuously underneath the keyswitches. Panels 1, 10, 100, 1000 illuminate homogeneously preferably from their entire top surfaces 2, and connect to a power source at terminals 3, which power source is preferably the computer keyboard port. Alternatively, other embodiments may include masking, deactivation or other construction that results in portions of the top surfaces 2 radiating light and portions not radiating light. For example, the inventors envision embodiments in which the panels comprise portions which may not be conventionally classified as EL material, or panels which are EL material but are masked.

Panels 1, 10, 100 are preferably installed by being laid on top of the contact membrane or other circuit board so that the apertures align properly with the areas on the contact membrane corresponding to each key. The keyswitch assemblies are inserted into or over the apertures and, for designs with a base plate, the base plate is attached over the EL panel and around the keys.

The panels 1, 10, 100, 1000 are secured in the keyboard by conventional means, such as being friction fit with one or more members, being a thin membrane sandwiched between other layers of the keyboard. The EL material may be material commonly referred to as "EL" such as that available from MetroMark, Inc. of Minnetonka, MN, U.S.A.

Figure 2 is a top view of a keyboard layout 4 with elongated strip-shaped electroluminescent panels 1 beneath and between the keycaps 5. The panels illuminate substantially the entire keyboard layout 4 and preferably every keycap 5, due to the effect of the light from the panels 1 radiating up both between the keycaps and through the translucent keycaps 5.

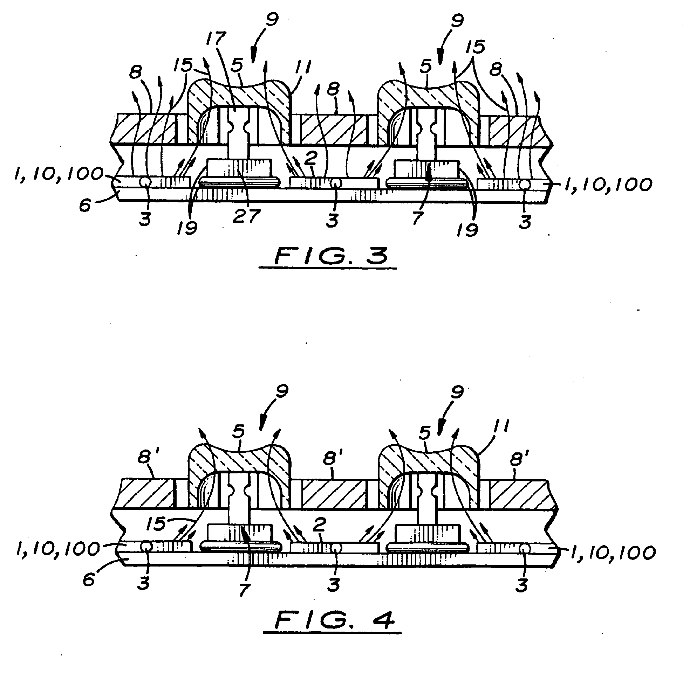

Figures 3 and 4 illustrate cutaway side views of a keyboard assembly including discrete keyswitches 9 mounted for contact with printed circuit board 6. Each keyswitch 9 comprises keycaps 5, and stem 7 which includes post 17 and actuating member 27, with at least the cap 5 and post 17 preferably being translucent or transparent. Electroluminescent panels are installed on top of the circuit board 6, underneath the keycaps 5 and beside the stem 7 of each keyswitch. The EL panels, as illustrated, may be either a plurality of strip panels 1 or portions of one or more sheet panels 10, 100 each having its own electrodes 3 for connection to a power source. In the case of strip panels 1, the EL material extends close beside the outside surface of stems 7 on at least two sides, and, in the case of sheet panels 10, 100, the EL material extends closely around the entire outside perimeter or "outer side surface 19" of stems 7. With either EL panel style, the EL material extends under the outer perimeter edge 11 of the keycaps 5, but not inside the keyswitch, and not through any apertures in the stem or keycaps. This way, as depicted by rays 15, the EL material can radiate up from outside the keyswitch up through the cap, and also into the stem and up through the cap top.

In Figure 3, a translucent base plate 8 is installed over the panels 1, 10, 100, which plate 8 may take the place of the conventional opaque base plate that forms the top of a conventional keyboard housing. In such a design, light radiates up through the base plate 8, as well as into and up through the keyswitches, to give an overall "glowing" effect to substantial portions of the keyboard.

In Figure 4, a less preferred, opaque base plate 8' is installed. In such a design, the opaque base plate 8' substantially blocks the light from radiating up between the keyswitches, so that the light travels only into and up through the keyswitches. Such alternatives provide substantial lighting to the entire keyswitch and do so by providing the light source around the keyswitches. The invention also includes embodiments in which masking is placed directly on the upper surface of the EL panels to mask off selected areas of the EL panels, for example, for special design effects desired for artistic reasons or personal preference.

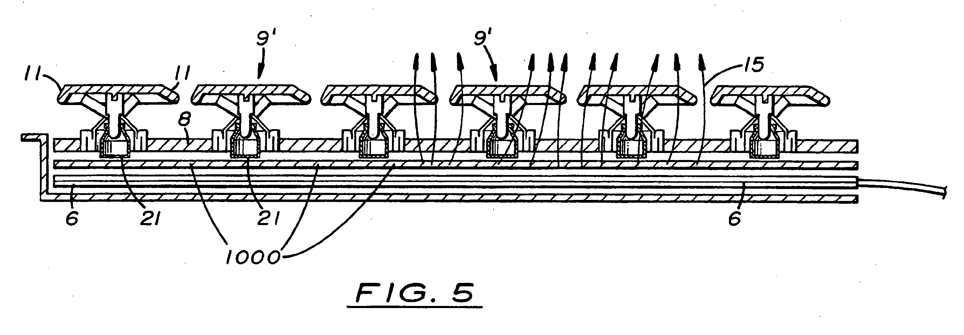

Figure 5 illustrates in cutaway view a panel that extends continuously underneath one or more keyswitch assemblies 9'. Such a panel preferably is entirely or substantially EL material so that it may described as an EL sheet that extends, and radiates, continuously underneath one or more keyswitch assemblies. Such a continuous sheet therefore needs no perforations for fitting around the key stem or stem path; instead, the EL sheet 1000 extends across the stem path, and the bottom end 21 of the stem that is pushed down during key depression actually contacts and pushes against the sheet 1000 rather than the contact membrane. The contact of keyswitch to EL sheet 1000 transfers sufficient force to the contact membrane 6 to accomplish the keyswitch's task without direct contact between the keyswitch and the contact membrane. Because the EL sheet 1000 extends continuously underneath the keyswitches 9', the light rays 15 may shine up through the keyswitch as well as up through the space between the keyswitches. Alternatively, the inventors envision that portions of the EL sheet 1000 shown in Figure 5 may be masked, deactivated, or made from non-radiating material, as desired for economic or aesthetic reasons.

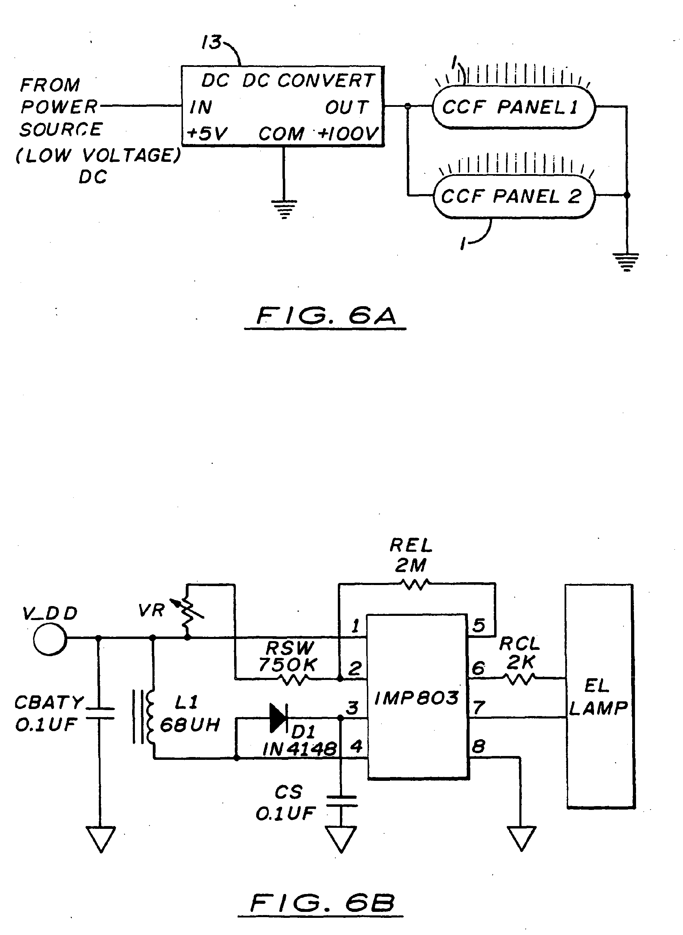

Figure 6A is a schematic diagram of a typical wiring diagram for one embodiment of the invented backlighting system. The panels 1 are connected between a common ground and a high voltage source, such as DC-to-DC converter 13, which converts +5 volts to +100 volts in this example. Multiple converters 13 may be applied to drive larger electroluminescent panels 1, or multiple panels.

Figure 6b is a schematic diagram of an inverter system for the invention. Other circuitry may be used and other inverter systems may be used, however, the digital inverter consumes less power than conventional toroid type inverters and so is preferred. The control system preferably includes an auto-off feature, so that the backlighting automatically turns off after a set period of un-use of the keyboard. This feature will extend the life of the battery and the EL material. A listing of materials that may be used for this circuitry follows:

**Table 1**

| Description | U/M | Schematic No. in Figure 6B |
|---|---|---|
| INVERTER IC - IMP803 | 1 | U1 |
| DIODE - 1N4148 BV=100V | 1 | D1 |
| VOLUME-100K | 1 | VR |
| CHOKE COIL - 68uH | 1 | L1 |
| CHIP CAP 0805 TYPE (+80/-20%) | | |
| 0.1UF | 2 | Cbaty, Cs |
| | | |
| CHIP RESISTOR (0805 TYPE) +/-10% | | |
| 2K | 1 | Rc1 |
| 2M | 1 | Re1 |
| 750K | 1 | Rsw |
| EL "LAMP" | 1 | EL LAMP |

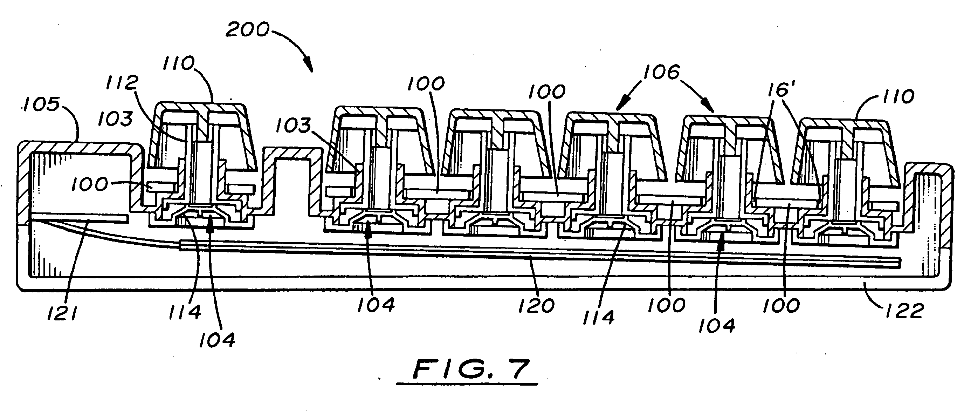

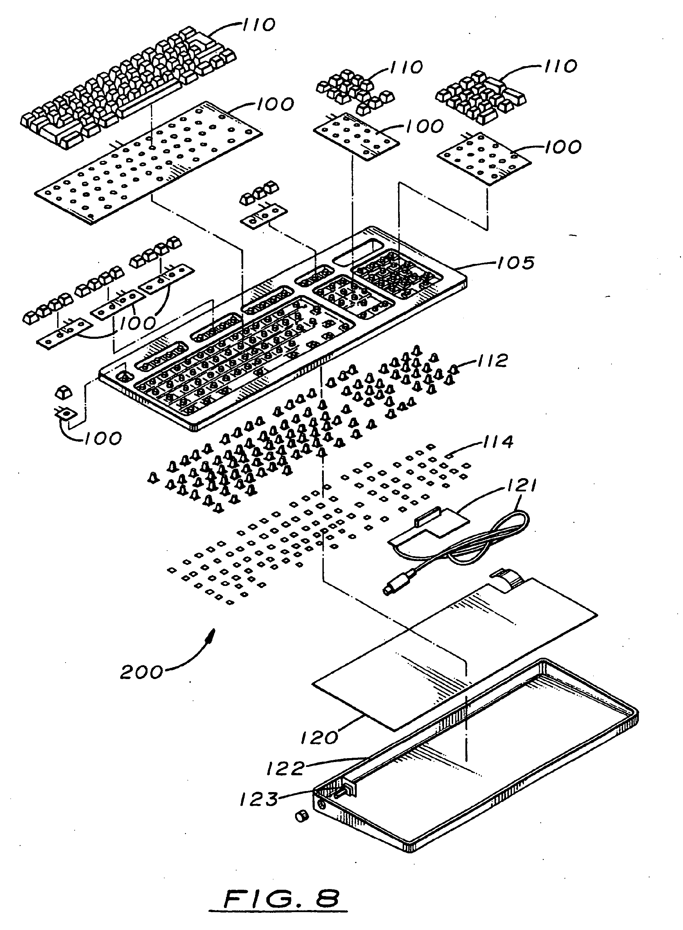

Figures 7 and 8 illustrate an embodiment of the present invention, in this embodiment a desktop keyboard 200 with the invented backlighting system. EL sheet(s) 100 are installed to place their apertures 16' snapped around the key collars 103 of the keyboard housing 105, which collars 103 surround the stems 104 of the keyswitch assemblies 106. The apertures 16' preferably have diameters the same as the outer diameters of the collars 103 for frictional engagement of the EL sheet 100 with the collar and so that the EL sheets 100 extend as near as possible to the outside surface of the stems 104. The keyswitches comprise cap 110 and stem 104, which comprises contact insert 112, and actuator 114 as shown disassembled in Figure 8. The contact inserts 112 slide down in the collars 103 when the key is depressed for contact the contact membrane 120. Membrane 120 is received within the bottom cabinet 122 of the keyboard 200 and cooperates with PCB and connector 121. After a key is released, the insert then slides back up to its original position as biased by the actuator 114. This keyboard 200 does not include masking or any base plate on top of the EL sheets 100, and preferably the contact insert 112, cap 110 are translucent. Therefore, the EL sheets 100 radiate light up between the keycaps 110, and also up through the cap 110 and through the top portion of the contact insert 112. Optionally, the key collars 103 may be translucent, which further allows light from the sheets 100 to pass through the collars 103, into the insert 112, and then up through the cap 110.

As shown to best advantage in Figure 8, assembly of embodiment 200 is convenient and economical because of the shape and position of the EL sheets 100. The EL material does not interfere with any moving parts and is received in a spaces which are not used for other purpose. As shown in Figure 8, several different sheets 100 may be installed in various different areas of the keyboard, for example, smaller sheets under the function keys, larger sheets under the letter keys, and medium sheets under the numeric keypad. Figure 8 illustrates one possible location for light intensity control and knob 123, but various locations may be appropriate for different keyboards. As described above, controls for independent on/off and adjustment of intensity may be included for each or some of the sheets, and may be designed from conventional technology. Also, various light colors may be used, or the sheets may be formed in other that rectangular shapes for personal taste or "designer" appeal.

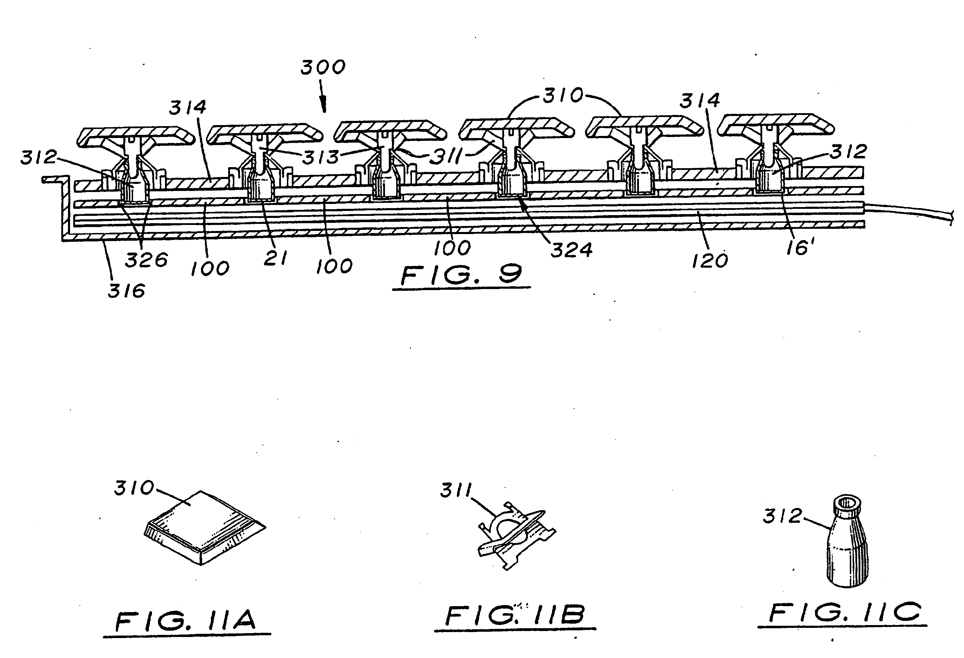

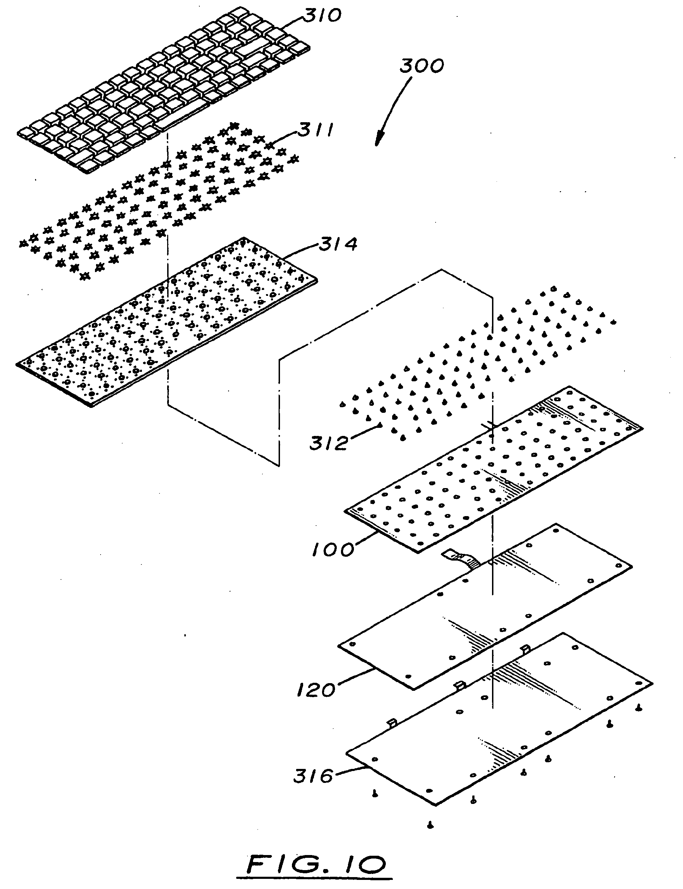

Figures 9 and 10 illustrate another design, in this case, a laptop keyboard 300. This keyboard 300 includes transparent key caps 310, transparent hinges 311, transparent rubber actuators 312 (biasing members), contact insert 313, transparent base plate 314, contact membrane 120, and metal mounting bracket 316. EL sheet 100 with small round apertures 16' is positioned between and generally parallel to the contact membrane 120 and the base plate 314. Apertures 16' are positioned directly below holes in the base plate 314 which are positioned directly below the actuators 312 and the center of the key caps 310. Thus, the actuators 312, baseplate holes, and apertures 16' are all axially aligned, to define the "stem path 324" in which the "stem" travels, wherein the "stem" in this keyboard design may be considered the actuator 312 and insert 313. Thus, the edge 326 of the EL material, defining the aperture 16', extends to be at or near the stem path. In other words, the EL material preferably extends as far as possible under the key cap 310, without entering into any hole or passage in the keyswitch or into the interior of the keyswi tch, without being centered under the cap, and without "light piping" to direct the light up to the center of the cap. This way, the EL "lamp" shines up from the outside of the keyswitch into a substantial portion of the cap and preferably through the hinge to illuminate the key. Also, the EL "lamp" shines up through the plate 314 to provide an appropriately-lit background around the keys. Because the stroke of the laptop keyboard keys is shorter than that in a desktop keyboard, the EL material delivers an adequate light output even from beneath the bottom of the clear base plate 314, and from beneath the transparent hinges 311.

As shown to best advantage in Figure 10, assembly of keyboard 300 is efficient and convenient, because of the approach of installing the EL panel 100 as a thin, planar sheet parallel to and inbetween already existing planar members of the keyboard. Enlargements of several of the pieces parts of keyboard 300 are shown in Figures 11A-C for clarity.

The nature and position of the EL material also provides the benefit of increased resistence to liquid spills. Having a continuous or near-continuous panel of the EL material extending between and/or under the keyswitches blocks liquid and moisture from reaching the PCB/contact membrane.

Various materials may be used for the parts of the invented system. For example, transparent key caps may be ABS or P.C. plastic; transparent hinges may be nylon or P.C.; transparent or semi-transparent "rubber" actuators may be silicone rubber, Latex, or rubber; transparent or white contact inserts may be POM or nylon; and lower housing members may be metal or plastic. Other materials may be chosen for the desired translucency and/or color, with durability of the material as a main objective.

The invented keyboard lighting system, with its many possibilities for different colors, patterns of light, and light adjustments, may be designed for the many individual tastes and needs of people in the market. The invented system offers advantages for young people who desire a stylish keyboard, senior or visually-impaired citizens who need help reading the keyboard, or others who are tired of the conventional computer look.

The invention that has been described is effective in providing illumination of a keyboard or different types of keyswitch assemblies, for example, many keyswitch assemblies made with conventional materials by conventional techniques. An important object of the present invention is to provide effective backlighting to keyboards and keyswitches of conventional design, rather than requiring significant redesign of keyboards and keyswitches.

Although this invention has been described above with reference to particular means, materials and embodiments, it is to be understood that the invention is not limited to these disclosed particulars, but extends instead to all equivalents within the scope of the following claims.

## Claims

1. A backlit keyboard (200) for use with a computer or internet television, the keyboard comprising a plurality of key switches (106) each comprising a cap (110) for finger contact and a stem (104), each of said stems being a generally vertical structure protruding from the cap toward the circuit board or membrane of the keyboard and which contacts the circuit board or membrane when the cap is depressed, each of said caps having a translucent or transparent portion, the keyboard further comprising a substantially planar panel (1; 10; 100; 1000) of light-emitting electroluminescent material extending beneath a plurality of said caps, wherein said panel emits light into said keyswitches and through said translucent or transparent portion of the caps, **characterized by** said electroluminescent material providing the top panel of the keyboard beneath the caps.

2. A backlit keyboard as in Claim 1, wherein the keyboard includes masking on said panel.

3. A backlit keyboard as in Claim 1, wherein the panel (1; 10; 100; 1000) of light-emitting electroluminescent material is powered by a computer power source with voltage increased by means of a voltage inverter.

4. A backlit keyboard as in Claim 1, wherein the panel is an electroluminescent membrane.

5. The keyboard as in Claim 1, wherein the caps (110) are substantially translucent or transparent

6. The keyboard as in Claim 1, wherein the stems (104) are substantially translucent or transparent.

7. The keyboard as in Claim 1, wherein the keyswitches (106) are substantially translucent or transparent.

8. The keyboard as in Claim 1, wherein the keyboard further comprises hinges (311) underneath the caps, wherein at least one of the hinges is substantially translucent or transparent.

9. The keyboard as in Claim 1, wherein the keyboard further comprises hinges (311) underneath the caps, wherein at least one of said hinges is substantially translucent or transparent nylon.

10. The keyboard as in Claim 1, wherein portions of the panel between some of the plurality of keyswitches are made from non-radiating material to limit light from radiating up between the caps of said some of the plurality of keyswitches.

11. The keyboard as in Claim 1, wherein the stems (104) each have an outer side surface, and the panel has one or more perforation (16; 16') and a perforation edge defining each perforation, wherein the panel receives the stems (104) in the perforations and the perforation edge extends near to the stem outer side surface for emitting light through the keyswitches.

12. The keyboard as in Claim 1, wherein said light-emitting electroluminescent material emits light up between the caps to be visible by a user of the keyboard.

13. The keyboard as in Claim 1, wherein each of said keyswitches (106) comprises a cap (110) and a stem (104) that are separate components.

14. The keyboard as in Claim 1, wherein said keyswitches comprise a stem (104) comprising a post extending downwardly from the cap (110).

15. The keyboard as in Claim 1, wherein said keyswitches each comprise an actuation member (114).

16. The keyboard as in Claim 1, wherein said keyswitches each comprise a biasing member.

17. The keyboard as in Claim 1 which is a desktop computer keyboard.

18. The keyboard as in Claim 1 which is a laptop computer keyboard.

19. The keyboard of Claim 1, wherein said panel of light-emitting electroluminescent material has holes (16, 16') through which said stems (104) extend.

20. The keyboard of Claim 1, wherein said caps are spaced apart and said panel of light-emitting electroluminescent material extends between the caps to emit light up through the spaces between caps to be visible to the user.

## Patentansprüche

1. Eine Tastatur mit Hintergrundbeleuchtung (200) für die Benutzung mit einem Computer oder beim Internetfernsehen, wobei die Tastatur eine Vielzahl von Tastaturknöpfen (106) umfasst, von denen jede eine Kappe (110) für den Fingerkontakt und einen Schaft (104) umfasst, wobei jeder dieser Schäfte aus einer im Allgemeinen vertikalen Struktur besteht, die von der Kappe zu der Platine oder Membran der Tastatur hervorsteht, und welcher die Platine oder die Membran berührt, wenn die Kappe hinuntergedrückt wird, wobei jede dieser Kappe einen transluzenten oder transparenten Abschnitt besitzt, wobei die Tastatur ferner eine im Wesentlichen planare Platte (1; 10; 100; 1000) aus lichtemittierendem Elektrolumineszenzmaterial umfasst, welche sich unter einer Vielzahl der besagten Kappen erstreckt, wobei die besagte Platte Licht in die besagten Tastaturknöpfe und über den besagten transluzenten oder transparenten Abschnitt der Kappen emittiert, **dadurch gekennzeichnet, dass** das besagte Elektrolumineszenzmaterial die Plattenoberseite der Tastatur unter den Kappen besorgt.

2. Eine Tastatur mit Hintergrundbeleuchtung nach Anspruch 1, wobei die Tastatur die Abdeckung der besagten Platte einschließt.

3. Eine Tastatur mit Hintergrundbeleuchtung nach Anspruch 1, wobei die Platte (1; 10; 100; 1000) aus lichtemittierendem Elektrolumineszenzmaterial von einer Computer-Energiequelle mit einer mittels eines Wechselrichters erhöhten Spannung mit Energie versorgt wird.

4. Die Tastatur nach Anspruch 1, wobei die Platte eine elektrolumineszente Membran ist.

5. Die Tastatur nach Anspruch 1, wobei die Kappen (110) im Wesentlichen transluzent oder transparent sind.

6. Die Tastatur nach Anspruch 1, wobei die Schäfte (104) im Wesentlichen transluzent oder transparent sind.

7. Die Tastatur nach Anspruch 1, wobei die Tastaturknöpfe (106) im Wesentlichen transluzent oder transparent sind.

8. Die Tastatur nach Anspruch 1, wobei die Tastatur ferner Scharniere (311) unter den Kappen umfasst, wobei zumindest eines der Scharniere im Wesentlichen transluzent oder transparent ist.

9. Die Tastatur nach Anspruch 1, wobei die Tastatur ferner Scharniere (311) unter den Kappen umfasst, wobei zumindest eines der Scharniere aus im Wesentlichen transluzentem oder transparentem Nylon besteht.

10. Die Tastatur nach Anspruch 1, wobei die Abschnitte der Platte zwischen einigen der Vielzahl der Tastaturknöpfe aus nicht-strahlendem Material bestehen, um das Licht bei der Abstrahlung zwischen den Kappen von diesen einigen der Vielzahl der Tastaturknöpfe zu beschränken.

11. Die Tastatur nach Anspruch 1, wobei die Schäfte (104) jeweils eine äußere Seitenfläche besitzen, und die Platte eine oder mehrere Perforationen (16; 16') und eine Perforationskante, die jede Perforation definiert, besitzt, wobei die Platte die Schäfte (104) in den Perforationen aufnimmt, und sich die Perforationskante nahe der äußeren Seitenfläche des Schaftes erstreckt, um Licht durch die Tastaturknöpfe zu emittieren.

12. Die Tastatur nach Anspruch 1, wobei das lichtemittierende Elektrolumineszenzmaterial Licht zwischen den Kappen emittiert, um für den Benutzer der Tastatur sichtbar zu sein.

13. Die Tastatur nach Anspruch 1, wobei jeder der Tastaturknöpfe (106) eine Kappe (110) und einen Schaft (104) umfasst, die getrennte Bestandteile sind.

14. Die Tastatur nach Anspruch 1, wobei die besagten Tastaturknöpfe einen Schaft (104) umfassten, der einen Stab umfasst, der sich von der Kappe (110) nach unten erstreckt.

15. Die Tastatur nach Anspruch 1, wobei die besagten Tastaturknöpfe jeweils ein Betätigungsglied (114) umfassen.

16. Die Tastatur nach Anspruch 1, wobei die besagten Tastaturknöpfe jeweils ein Neigeglied umfassen.

17. Die Tastatur nach Anspruch 1, wobei diese eine Tastatur für einen Desktop-Computer ist.

18. Die Tastatur nach Anspruch 1, wobei diese eine Tastatur für einen Laptop-Computer ist.

19. Die Tastatur nach Anspruch 1, wobei die besagte Platte aus lichtemittierendem Elektrolumineszenzmaterial Löcher (16, 16') besitzt, durch die sich die besagten Schäfte (104) erstrecken.

20. Die Tastatur nach Anspruch 1, wobei die besagten Kappen mit Zwischenraum voneinander getrennt angebracht sind und sich die besagte Platte aus lichtemittierendem Elektrolumineszenzmaterial zwischen den Kappen erstreckt, um Licht durch die Zwischenräume zwischen den Kappen zu emittieren, um für den Benutzer sichtbar zu sein.

## Revendications

1. Un clavier rétroéclairé (200) à utiliser avec un ordinateur ou un écran Internet, le clavier comprenant une pluralité de touches (106) chacune comportant un capuchon (110) qui est en contact avec le doigt et une tige (104), chacune desdites tiges étant généralement une structure verticale avançant depuis le capuchon vers la carte de circuit ou la membrane du clavier et qui entre en contact avec la carte de circuit ou la membrane lorsque le capuchon est enfoncé, chacun desdits capuchons comportant une partie translucide ou transparente, le clavier comprenant en outre un panneau (1 ; 10 ; 100 ; 1000) substantiellement planaire fait d'un matériau électroluminescent émetteur de lumière s'étendant sous une pluralité desdits capuchons, où ledit panneau émet de la lumière à l'intérieur desdites touches et à travers ladite partie translucide ou transparente des capuchons, **caractérisé par** ledit matériau électroluminescent constituant le panneau supérieur du clavier sous les capuchons.

2. Un clavier rétroéclairé selon la revendication 1, où le clavier comprend un masquage sur ledit panneau.

3. Un clavier rétroéclairé selon la revendication 1, où le panneau (1 ; 10 ; 100 ; 1000) fait d'un matériau électroluminescent émetteur de lumière est alimenté par une source d'énergie d'un ordinateur dont la tension est augmentée au moyen d'un onduleur de tension.

4. Un clavier rétroéclairé selon la revendication 1, où le panneau est une membrane électroluminescente.

5. Le clavier selon la revendication 1, où les capuchons (110) sont substantiellement translucides ou transparents.

6. Le clavier selon la revendication 1, où les tiges (104) sont substantiellement translucides ou transparentes.

7. Le clavier selon la revendication 1, où les touches (106) sont substantiellement translucides ou transparentes.

8. Le clavier selon la revendication 1, où le clavier comprend en outre des charnières (311) sous les capuchons, où au moins l'une des charnières est substantiellement translucide ou transparente.

9. Le clavier selon la revendication 1, où le clavier comprend en outre des charnières (311) sous les capuchons, où au moins l'une desdites charnières est substantiellement de nylon translucide ou transparent.

10. Le clavier selon la revendication 1, où des parties du panneau entre certaines touches parmi la pluralité de celles-ci sont faites à partir d'un matériau non rayonnant pour limiter le rayonnement de la lumière entre les capuchons desdites touches parmi la pluralité de celles-ci.

11. Le clavier selon la revendication 1, où les tiges (104) ont chacune une surface latérale externe, et où le panneau a une ou plusieurs perforations (16 ; 16') et un bord de perforation définissant chaque perforation, où le panneau reçoit les tiges (104) dans les perforations et où le bord de perforation s'étend près de la surface latérale externe de la tige pour émettre de la lumière à travers les touches.

12. Le clavier selon la revendication 1, où ledit matériau électroluminescent émetteur de lumière émet de la lumière entre les capuchons afin qu'ils soient visibles pour un utilisateur du clavier.

13. Le clavier selon la revendication 1, où chacune desdites touches (106) comprend un capuchon (110) et une tige (104) qui sont des éléments séparés.

14. Le clavier selon la revendication 1, où lesdites touches comprennent une tige (104) comportant une colonne s'étendant vers le bas à partir du capuchon (110).

15. Le clavier selon la revendication 1, où chacune desdites touches comprend un organe de commande (114).

16. Le clavier selon la revendication 1, où chacune desdites touches comprend un organe d'inclinaison.

17. Le clavier selon la revendication 1 qui est un clavier d'ordinateur de bureau.

18. Le clavier selon la revendication 1 qui est un clavier d'ordinateur portable.

19. Le clavier de la revendication 1, où ledit panneau fait d'un matériau électroluminescent émetteur de lumière comporte des trous (16 ; 16') à travers lesquels s'étendent lesdites tiges (104).

20. Le clavier de la revendication 1, où lesdits capuchons sont espacés et où ledit panneau fait d'un matériau électroluminescent émetteur de lumière s'étend entre les capuchons pour émettre de la lumière à travers les espaces entre les capuchons afin qu'ils soient visibles pour l'utilisateur.
